# EUROPÄISCHE PATENTANMELDUNG

(11) **EP 1 427 229 A1**
(43) Veröffentlichungstag der Anmeldung: **09.06.2004**
(21) Anmeldenummer: 03104059.5
(22) Anmeldetag: 03.11.2003
(51) Int. Cl.: H04Q 7/24, H04L 29/06

(54) **Austausch geographischer Positionsinformation zwischen Positionsinformations-Server und Kernnetzwerk-Element**

(30) Priorität: 03.12.2002 DE 10256457
(71) Anmelder: SIEMENS AKTIENGESELLSCHAFT, 80333 München (DE)
(72) Erfinder: Hochrainer, Christoph, 1150, Wien (AT); Reisinger, Heinz, 1170, Wien (AT)

(57) **Zusammenfassung**

Ein optimierter Austausch geographischer Positionsinformationen zwischen einem Kernnetzwerk-Element (HLR,M1,M2,N2) eines öffentlichen Telekommunikationsnetzes, insbesondere Mobilfunknetzes, (MN1,MN2) und einer Positionsinformations-Servereinrichtung (P1) wird dadurch erreicht, dass von der Servereinrichtung (P1) vor dem Zugriff auf ein Kernnetzwerkelement zum Austausch von Positionsinformationen (insbesondere zum Auslesen) ein Reihe von Zugriffsversuchen mit Nachrichten verschiedener Nachrichtenarten erfolgt, bis ein Zugriffsversuch zu einem erfolgreichen Informationsaustausch geführt hat. Hat ein Zugriffsversuch zu einem erfolgreichen Informationsaustausch geführt, wird seitens der Servereinrichtung (P1) gehaltene Entscheidungsinformation (PE) um einen entsprechenden Eintrag (e) ergänzt; bei einem späteren Zugriff auf das Kernnetzwerk-Element wird anhand des Eintrags aufgrund der eintragsgemäßen Nachrichtenart durchgeführt. Als Nachrichtenarten werden Location based Services (LCS) Standard-Nachrichten und Any-Time-Interrogation (ATI) Nachrichten eingesetzt.

## Beschreibung

Die Erfindung betrifft ein Verfahren zum Austausch geographischer Positionsinformationen zwischen einem Kernnetzwerk-Element eines öffentlichen Telekommunikationsnetzes, insbesondere Mobilfunknetzes, und einer Positionsinformations-Servereinrichtung unter Verwendung zumindest einer Nachricht eines von Kernnetzwerken des Telekommunikationsnetzes unterstützten Protokolls, wobei seitens der Servereinrichtung eine Nachrichtenart der für den Austausch der Positionsinformationen verwendeten Nachricht ausgewählt wird; sowie eine Positionsinformations-Servereinrichtung zur Durchführung dieses Verfahrens.

In modernen Mobilnetzen kommen zunehmend Dienste zum Einsatz, in denen der geographische Aufenthaltsort eines Teilnehmers bei der Ausführung einbezogen wird. Solche Dienste greifen auf in dem Netz gemäß dem ETSI/3GPP-Standard TS 23.271 eingerichtete sogenannte Location-Services ("Lokalisierungsdienste", LCS) zurück, die geographische Positionsdaten bereit stellen. Die geographischen Positionsinformationen betreffen in der Regel den Standort eines Teilnehmers des Mobilnetzes bzw. seines mobilen Endgeräts. In dem genannten 3GPP-Standard berücksichtigte Positionsdienste sind insbesondere die Positionssysteme TOA ("Uplink Time of Arrival"), E-OTD "Enhanced Observed Time Difference") und GPS ("Global Positioning System").

Als zentrale Ansprechstelle für die Lokalisierungsdienste in Telekommunikationsnetzen sind Positionsinformations-Server vorgesehen. In einem GSM-Netz beispielsweise ist ein Positionsinformations-Server als eigener Netzknoten realisiert, der als MLC ('Mobile Location Center') bezeichnet wird (mehrere MLCs können in einem GSM-Netz vorgesehen sein). Der Server ist in der Regel einem bestimmten Mobilnetz zugeordnet und kann über die Positionierung der Netzteilnehmer in diesem Mobilnetz hinaus in Abhängigkeit von gegebenenfalls bestehenden Roaming-Verträgen auch die Positionierung von Teilnehmer des eigenen Netzes, die gerade in fremden Netzen roamen und/oder von Teilnehmern fremder Netze übernehmen. Positionsinformations-Server haben naturgemäß sehr viel Nachrichtenaustausch mit den Netzwerkelementen des Kernnetzwerks ('core network') eines Telekommunikationsnetzes - im Falle eines Mobilfunknetzes sind dies insbesondere das Heimatregister und die Mobilvermittlungsstellen - zu bewältigen, wobei dieser Nachrichtenaustausch teils innerhalb eines Netzes, teils netzübergreifend geschieht. Die Kernnetzwerk-Elemente eines Mobilfunknetzes kommunizieren über das im ETSI/3GPP-Standard TS 29.002 standardisierte MAP-Protokoll, welches den Kernnetzwerk-Elementen eine begrenzte und wohldefinierte Menge an standardisierten MAP-Nachrichten für die Kommunikation zur Verfügung stellt. Dennoch besteht oftmals seitens des Positionsinformations-Servers das Problem, den Austausch einer möglichst genauen Positionsinformation mit Kernnetzwerk-Elementen durchzuführen, die eine sehr unterschiedliche Unterstützung der zugehörenden Protokolle bzw. Nachrichten und/oder Lokalisierungsdienste aufweisen.

Die hier betrachtete geographische Positionsinformation (in der Folge kurz als "Positionsinformation" bezeichnet) kann verschiedene Genauigkeiten aufweisen und auch innerhalb des Netzes - in Abhängigkeit vom betreffenden Kernnetzwerk-Element - variieren. Im Falle der LCS-kompatiblen Positionsinformation kann sie in der Form geographische Breite und geographische Länge dargestellt werden; im "einfachsten" Fall entspricht sie der innerhalb eines Mobilnetzes verwendeten Standort-Information, die die Mobilfunkzelle und/oder die Mobil-Vermittlungsstelle angibt, in deren Einzugsbereich sich der betreffende Mobilteilnehmer sich befindet, und somit von der Topologie des Mobilfunknetzes abhängt.

In den letzten Jahren wurde im Rahmen des 3GPP-Konsortiums eine Reihe von Standards für Lokalisierungsdienste erstellt; hier sind insbesondere die Standards TS 23.271 (Funktionsdarstellung des LCS), TS 29.002 (Erweiterungen des MAP) und TS 23.032 (UGAD - 'Universal Geographic Area Description') zu nennen. Kern der standardisierten Implementation des LCS ist ein Gateway - ein sogenanntes GLMC ('Gateway Mobile Location Center') - das eine Brücke zwischen Stellen, die Lokalisierungsanfragen senden oder Lokalisierungsberichte entgegen nehmen (unter Verwendung eines IP-basierten Protokolls), und der jeweiligen Positionsbestimmungs-Prozedur bildet. Diese wird über SS7-Schnittstellen innerhalb des Kernnetzwerks und Radio-Einzugsbereichs des Netzes ausgeführt. Für das Kernnetzwerks eines Mobilnetzes haben TS 23.271 und TS 29.002 neue MAP-Dienste spezifiziert, die für die Lokalisierung mobiler Teilnehmer bestimmt sind. Die Ergebnisse dieser Dienste können als (ungefähre) Koordinaten auf der Erdoberfläche unter Einbeziehung der zugehörenden Unsicherheitsangabe interpretiert werden.

Jedoch sind Implementation und Einsatz eines standardgemäßen Positionsinformations-Servers, der lediglich auf diesen neuen LCS-MAP-Diensten beruht, für heutige Mobilnetz-Umgebungen nicht ausreichend. Dies liegt daran, das in den gegenwärtigen Infrastrukturen der Mobilnetz-Kernnetzwerke nur ein kleiner Teil der Netzwerkelemente die neuen LCS-MAP-Dienste unterstützt; die überwiegende Zahl der Netzwerkelemente unterstützen vielmehr lediglich Prä-Standard-Mechanismen, nämlich auf MAP-ATI und/oder SMS - SIM beruhende Verfahren zur Lokalisierung mobiler Teilnehmer, und diese liefern weniger genaue Positionsinformationen. Die Umgebungsstruktur wird noch komplexer, wenn im Netz Kernnetzwerk-Elemente von verschiedenen Herstellern mit verschiedenen MAP-Implementationen und/oder -Versionen eingesetzt sind, was dazu führt, dass im Mobilnetz nicht nur die Positionierungsgenauigkeit inhomogen ist, sondern auch die MAP-Versionen und somit auch die zugehörende Kommunikation; um so komplizierter wird die Situation, wenn mehrere Netze - z.B. bei Roaming - beteiligt sind. Hierfür wird ein Positionsinformations-Server benötigt, der seinen Klienten transparenten Zugriff auf Positionsinformationen nach dem Stand der Technik bietet.

Es ist daher Aufgabe der Erfindung, den Austausch von Positionsinformationen mit einem Positionsinformations-Server - insbesondere das Auslesen dieser Daten aus einem Kernnetzwerk-Element - dahin gehend zu verbessern, dass möglichst genaue Positionsinformationen in Abhängigkeit von den jeweils angesprochenen Netzwerkelement übertragen werden können, sodass besonders in heterogenen Netzen der Zugriff auf effiziente Weise durchführbar ist. Hierbei wird unter "heterogenem Netz" ein Netz mit Kernnetzwerk-Elementen verschiedener Hersteller und/oder mit unterschiedlichem Grad der Konformität bezüglich der Implementierung der LCS-Standards verstanden. Des weiteren soll, um ein Roaming der Teilnehmer zu berücksichtigen, die Behandlung mobiler Netzwerke verschiedener Standards wie GSM, GPRS oder UMTS möglich sein.

Diese Aufgabe wird von einem Verfahren der eingangs genannten Art bzw. einer Positionsinformations-Servereinrichtung zur Durchführung eines solchen Verfahrens gelöst, bei welchem durch die Servereinrichtung vor dem Zugriff auf ein Kernnetzwerkelement zum Austausch von Positionsinformationen eine Reihe von Zugriffsversuchen mit Nachrichten verschiedener Nachrichtenarten erfolgt, bis ein Zugriffsversuch zu einem erfolgreichen Informationsaustausch geführt hat.

Die Erfindung gestattet den flexiblen Zugriff auf Kernnetzwerk-Elemente, um Positionsinformation mit möglichst hoher Genauigkeit zu erhalten, wobei gerade in einem heterogenen Mobilfunknetz je nach Beschaffenheit des Netzes, insbesondere Mobilfunknetzes, die jeweils effiziente Methode für die Übertragung der Positionsdaten eingesetzt wird In einer vorteilhaften Weiterbildung der Erfindung wird, um den Aufwand in aufeinanderfolgenden Zugriffen zu reduzieren, seitens der Servereinrichtung Entscheidungsinformation gehalten, in der zumindest einem Kernnetzwerk-Element jeweils zumindest eine Nachrichtenart zur Durchführung des Austauschs von Positionsinformationen zugeordnet ist, wobei durch die Servereinrichtung, wenn ein Zugriffsversuch zu einem erfolgreichen Informationsaustausch geführt hat, die Entscheidungsinformation um einen Eintrag ergänzt wird - sofern dieser nicht schon vorhanden ist -; in diesem ist jene Nachrichtenart, mit der der Zugriff erfolgreich war, dem Kernnetzwerk-Element zugeordnet. Hierbei ist es günstig, wenn durch die Servereinrichtung vor dem Zugriff auf ein Kernnetzwerkelement zum Austausch von Positionsinformationen die Entscheidungsinformation auf einen Eintrag für das betreffende Kernnetzwerk-Element geprüft wird und, falls ein solcher Eintrag vorliegt, der Positionsinformationen-Austausch aufgrund der eintragsgemäßen Nachrichtenart durchgeführt wird, anderenfalls ein Reihe von Zugriffsversuchen mit Nachrichten verschiedener Nachrichtenarten erfolgt, bis ein Zugriffsversuch zu einem erfolgreichen Informationsaustausch geführt hat, und seitens der Servereinrichtung die Entscheidungsinformation - soweit nicht schon vorhanden - ergänzt wird.

Des weiteren ist es günstig, wenn ein Zugriffsversuch mit Nachrichten gemäß den geltenden LCS-Standards erfolgt, und falls dies nicht erfolgreich ist, sodann zumindest ein Zugriffsversuch gemäß vor den LCS-Standards geltenden Verfahren, insbesondere mittels MAP-ATI-Abfragen nach dem CAMEL-Standard, erfolgt. Um eine Bestimmung der aktuellen Position eines Teilnehmers zu erzielen, kann in einer Weiterbildung vorgesehen sein, dass an ein mobiles Endgerät des Netzes, dessen geographische Position zu bestimmen ist, eine Kurzmitteilung gesendet wird, wodurch ein Paging für dieses Endgerät ausgelöst wird.

Ebenso kann die Nachrichtenart im Falle, dass kein Eintrag für ein bestimmtes Kernnetzwerk-Element gefunden wurde, so bestimmt werden, dass eine 'Application Context Negotiation' ("Anwendungskontext-Aushandlung") mit dem Element durchgeführt wird.

Die Entscheidungsinformation kann zweckmäßiger Weise in Form einer Entscheidungstabelle gehalten sein, in der Einträge nach den Kernnetzwerk-Elementen geordnet sind.

Die Erfindung samt weiterer Vorzüge wird im Folgenden anhand eines nicht einschränkenden Ausführungsbeispiels näher erläutert. Hierbei werden die beigefügten Zeichnungen herangezogen, welche zeigen
- Fig. 1: ein Blockdiagramm eines GSM-Netzes mit einem erfindungsgemäßen GMLC;
- Fig. 2: ein Ablaufsdiagramm für die Durchführung eines Zugriffs durch den GMLC der Fig. 1.

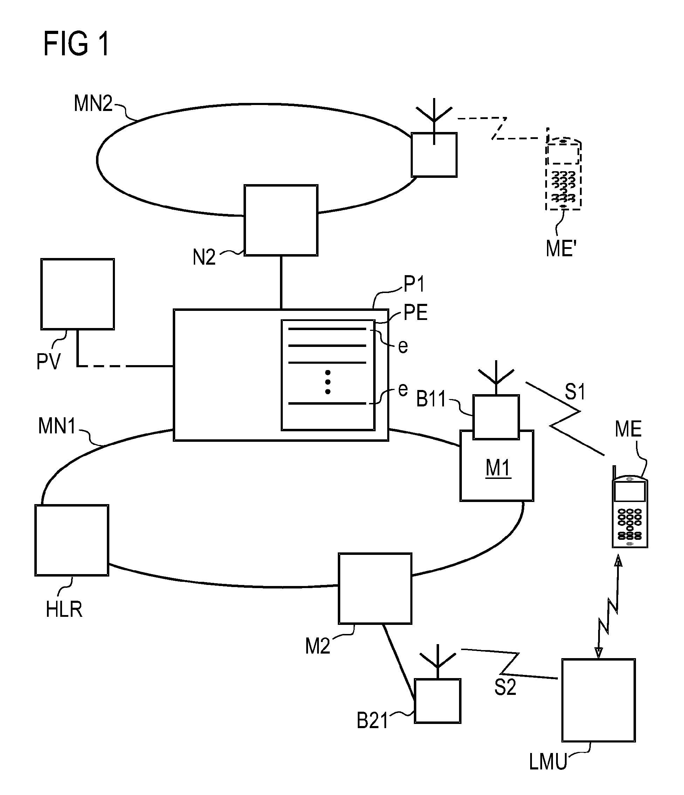

In Fig. 1 ist ein beispielhaftes heterogenes GSM-Netz MN1 gezeigt, an das ein mobiler Teilnehmer über sein Mobil-Endgerät ME über eine Funkschnittstelle S1 zu einer Basisstation B11 angeschlossen ist. Selbstverständlich sind in der Regel eine Vielzahl von Teilnehmern an das Netz angeschlossen, die jedoch hier, ebenso wie die zugehörenden Basisstationen und weiteren Netzstellen der Übersichtlichkeit halber nicht gezeigt sind; vielmehr zeigt Fig. 1 lediglich die für das Verständnis der Erfindung notwendigen Netzkomponenten. Zu letzteren gehören insbesondere ein Heimatregister HLR ('Home Location Register') nach bekannter Art, das der zentralen Verwaltung der Teilnehmerdaten des Netzes dient, sowie Mobil-Vermittlungsstellen M1,M2 ('Mobile Switching Center', MSC). In der gezeigten Topologie versorgt die Vermittlung M1 den Einzugsbereich der dem Teilnehmer ME zugeordneten Basisstation B11. Heimatregister HLR und Mobil-Vermittlungsstellen M1,M2 sind Netzknoten des Kernnetzwerks des Netzes MN1; wie bereits erwähnt, kann in der Regel davon ausgegangen werden, dass die einzelnen Elemente des Kernnetzes von verschiedenen Herstellern stammen und/oder verschieden vollständige Implementationen der LCS-Standards realisieren.

Die geographische Position des mobilen Teilnehmers bzw. seines Endgeräts ME wird mittels einer Positionsbestimmungseinheit LMU ('Location Measurement Unit') bestimmt, z.B. mittels Radio-Messungen nach dem TOA-Positionssystem. Die von der Positionsbestimmungseinheit LMU ermittelten Positionsdaten werden in das Netz MN1 eingespeist, z.B. entsprechend TS 23.271 über eine Funkschnittstelle S2, durch die die Einheit LMU gleich einem mobilen Endteilnehmer über eine Basisstation B21 an das Netz vermittels einer Mobil-Vermittlungsstelle M2 angeschlossen ist.

Für die Behandlung der Positionsinformationen ist in dem Netz MN1 ein Positionsinformation-Server (GMLC) P1 vorgesehen, der mit den Elementen HLR,M1,M2 des Kernnetzwerks des Netzes MN1 kommuniziert. Daneben kann der GMLC P1 auch mit Kernnetzwerk-Elementen anderer Netze kommunizieren, z.B. mit dem Netzknoten N2 eines zweiten Mobilfunknetzes MN2, in dessen Einzugsbereich sich der mobile Teilnehmer - in Fig. 1 als Endgerät ME' strichliert dargestellt - zeitweise aufhalten mag.

Gemäß der Erfindung baut der GMLC P1 dynamisch eine Entscheidungstabelle PE auf, in der Information gehalten wird, auf welche Weise auf ein bestimmtes Kernnetzwerk-Element HLR, M1,M2,N2 zugegriffen werden kann. Die Entscheidungstabelle PE enthält z.B. eine Liste von Einträgen e, in denen für jeweils ein Kernnetzwerk-Element eingetragen ist, welche Nachrichten bzw. Protokolle bei einem früher erfolgten Zugriff erfolgreich waren. Die Entscheidungstabelle PE kann wie in Fig. 1 gezeigt in der Positionsinformation-Servereinrichtung selbst gehalten sein oder ebenso gemäß einer nicht gezeigten Variante in einem von der Servereinrichtung gesonderten Speicher.

Wenn der GMLC P1 auf ein bislang unbekanntes - nämlich in der Entscheidungstabelle PE nicht eingetragenen - Partner-Netzwerkelement zugreifen soll, werden zuerst die Fähigkeiten des Netzwerkelements bestimmt. Eine erste Abschätzung der Fähigkeiten des Partner-Netzwerkelements kann im Laufe der sogenannten 'Application Context Negotiation' (ACN) gewonnen werden, bei der - in einem MAP-Standardverfahren nach den 3GPP-Standards - der GMLC P1 einen MAP-Dialog mit dem Partner einrichtet, wobei der hierbei erstellte 'Application Context' die Version jeweils einer MAP-Nachricht oder eines MAP-Dienstes angibt, die bzw. das vom Partner-Netzwerkelement implementiert ist.

Häufig können detaillierte Informationen über die Fähigkeiten eines Partners nur über Versuch-und-Irrtum Strategien bestimmt werden, weil ein Partner möglicher Weise die ACN nicht vollständig implementiert hat und nicht unterstützte MAP-Nachrichten einfach ignoriert. Deshalb versucht der GMLC P1 zuerst, den Partner über die Standard-MAP-Dienste für Lokalisierungsanfragen anzusprechen (Nachrichten MAP-SEND-ROUTING-INFO-FOR-LCS bzw. MAP-PROVIDE-SUBSCRIBER-LOCATION). Wenn der GMLC P1 im Zuge der ACN eine dieser entsprechende Antwortnachricht erhält, so wird das betreffende Partner-Netzwerkelement (bzw. die Netzwerkelemente, falls mehrere Partner-Netzwerkelemente beteiligt waren) in der Entscheidungstabelle als LCS-Standard-gemäß eingetragen.

Wird dagegen eine Fehlermeldung zurück gegeben, aus der hervor geht, dass das adressierte Kernnetzwerk-Element den LCS-MAP-Dienst nicht unterstützt, so wird vom GMLC P1 die Entscheidungstabelle dem entsprechend aktualisiert, und der GMLC P1 nimmt die MAP-Dienste für Prä-Standard Lokalisierung (MAP-ANY-TIME-INTERROGATION zum Heimatregister) auf, wobei gegebenenfalls noch vorher ein zwangsweises ('enforced') Paging ausgeführt wird. Dieses zwangsweise Paging kann beispielsweise durch Versenden einer leeren Kurznachricht (des Kurznachrichtendienstes SMS der GSM-Netze) an den Teilnehmer erfol gen. Falls die Fehlermeldung nicht genügend spezifiziert ist oder die Zeit überschritten wird, wird ein interner Zähler für das betreffende Netzwerkelement inkrementiert und der gleiche MAP-Dienst wiederholt. Wenn eine einstellbaren Anzahl von aufeinanderfolgenden Fehlversuchen erreicht wird, so bedeutet dies, dass der GMLC P1 eine Prä-Standard Lokalisierungsanfrage versuchen muss; ein entsprechender Eintrag wird der Entscheidungstabelle hinzu gefügt.

Der beschriebene Ablauf kann unter Umständen Zeit und Ressourcen in Anspruch nehmen, jedoch findet er nur bei dem jeweils ersten Zugriff auf ein Netzwerkelement durch den GMLC P1 statt. Bei einem folgenden Nachrichtenwechsel liest der GMLC den entsprechenden Eintrag der internen Entscheidungstabelle und spricht sofort den passenden MAP-Dienst an.

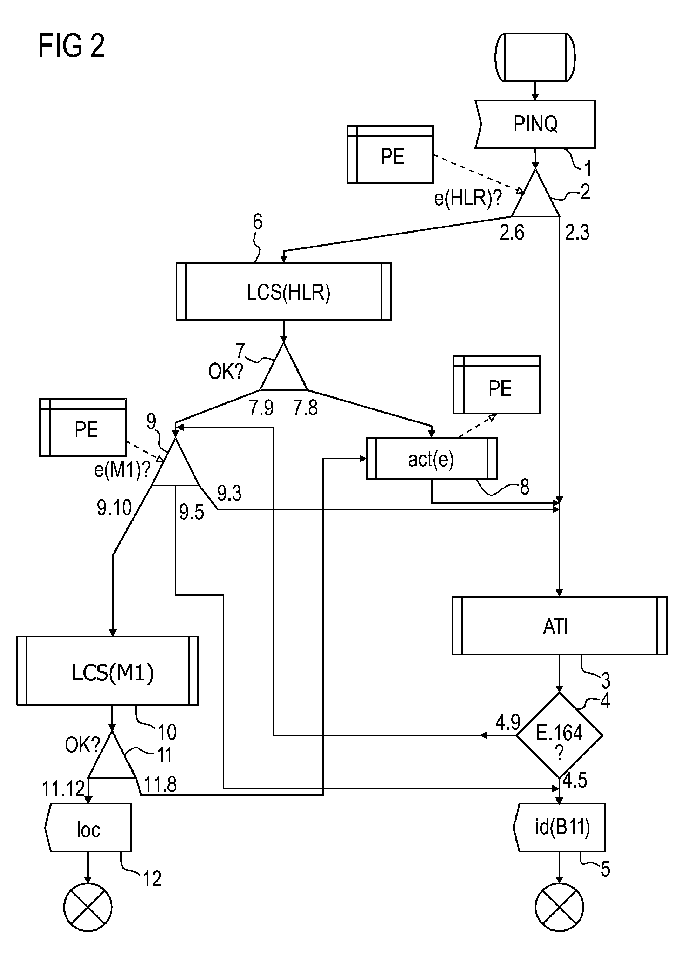

Fig. 2 zeigt ein Ablaufsdiagramm, wie die seitens des erfindungsgemäßen GMLC P1 bei der Behandlung einer Positionierungsanfrage im Sinne des oben Gesagten ausgeführt werden. Aufgrund des Empfangs 1 einer Positionierungsanfrage PINQ wird der Vorgang begonnen. Die Anfrage PINQ stammt beispielsweise von einem externen Server PV, der mit dem GMLC p1 beispielsweise über das Internet oder ein anderes Kommunikationsnetz verbunden ist und auf dem eine Anwendung abläuft, die die geographische Position des Netzteilnehmers ME benötigt; ein Beispiel für eine solche Anwendung ist ein ortsbezogenes Service, bei dem der Teilnehmer ME den Ort eines Restaurants, Kartenschalters od.dgl. in seiner Umgebung erfragt.
Der GMLC führt nun eine Überprüfung 2 der in der Entscheidungstabelle PE enthaltenen Entscheidungsinformation durch, und zwar nach einem Eintrag, der sich auf das zuständige Standortregister, d.i. im Netz MN1 das Heimatregister HLR, bezieht. Geht aus einem solchen Eintrag hervor, dass das Heimatregister HLR den LCS-Standard nicht unterstützt - Zweig 2.3 zu Schritt 3 -, so wird eine ATI-Abfrage, also mittels einer ANY-TIME-INTERROGATION-Nachricht des MAP, an das Heimatregister durchgeführt, um die Mobilfunkzelle bzw. die Mo bil-Vermittlungsstelle M1 zu bestimmen, in deren Einzugsbereich der erfragte Teilnehmer ME sich aufhält. Um eine Bestimmung des aktuellen Standorts zu erreichen, kann bei Bedarf ein Paging z.B. durch das Versenden einer leeren Kurznachricht über den bekannten SMS-Dienst des GSM-Netzes erzwungen werden.

Nach der ATI-Abfrage wird bestimmt - Entscheidung 4 -, ob eine E.164-Nummer der aktuellen Mobil-Vermittlungsstelle des Teilnehmers verfügbar ist. Kann die E.164-Nummer bestimmt werden, so wird als Nächstes geprüft, ob die Vermittlungsstelle M1 LCS-konform ansprechbar ist, was einer Verzweigung 4.9 zu dem weiter unten behandelten Überprüfung 9 entspricht.

Jedoch im Falle der mangelnden Verfügbarkeit der E.164-Nummer ist ein Senden einer LCS-konformen geographischen Position nicht möglich, weshalb über Zweig 4.5 zu Schritt 5 verzweigt wird, in dem anstelle einer LCS-Positionsinformation die Identifikationsnummer id(B11) der Mobilfunkzelle an die anfragende Stelle, nämlich den externen Server PV, gesendet wird.

Wenn dagegen in der Überprüfung 2 ein Eintrag e(HLR) gefunden wird, dem zufolge das Heimatregister HLR eine LCS-konforme Anfrage bearbeiten kann, oder kann überhaupt kein Eintrag für dieses Netzwerkelement gefunden werden, geht der GMLC über Zweig 2.6 zu Schritt 6 vor. Mit dem Heimatregister wird eine LCS-Standard-Anfrage zur Bestimmung der für die tatsächliche Positionierung verantwortlichen Mobil-Vermittlungsstelle durchgeführt. Hierbei gegebenenfalls auftretende Fehler ergeben die Entscheidung 7: Ergeben sich Fehler, die anzeigen, dass das Register HLR die Anfrage nicht LCS-konform behandeln kann, - Zweig 7.8 - so wird in Schritt 8 die Entscheidungstabelle PE durch Einfügen bzw. Korrektur act(e) eines entsprechenden Eintrags e(HLR) für das Heimatregister HLR aktualisiert, und sodann wird mit Schritt 3 fortgesetzt.

Im LCS-konformen Fall 7.9 jedoch findet ein erfolgreicher Informationsaustausch zwischen dem GMLC und dem Heimatregister HLR statt, wobei der GMLC die E.164-Nummer der für den gesuchten Teilnehmer ME zuständigen Mobil-Vermittlungsstelle M1 erhält.

In der nun folgenden Überprüfung 9 wird nach einem Eintrag e(M1) gesucht, ob die Vermittlungsstelle M1 LCS-konform ist: Ein positiver Eintrag entspricht Weg 9.10, siehe unten; gleichartig wird der Fall, dass ein Eintrag gänzlich fehlt, behandelt. Falls die Entscheidungsinformation vorliegt, dass die Vermittlungsstelle nicht LCS-konform ist, so wird geprüft, ob eine ATI-Nachricht (vgl. die Diskussion zu Schritt 3 oben) noch zu senden ist oder bereits gesendet wurde. In ersterem Fall wird entlang Weg 9.3 zur ATI-Abfrage verzweigt; in letzterem Fall wird - sofern aus der ATI-Anfrage keine geeignete E.164-Nummer vorliegt - nach Weg 9.5 mit dem Senden 5 der Identifikationsnummer id(B11) der Mobilfunkzelle der Vorgang beendet. Falls die E.164-Nummer vorhanden ist, wird ebenfalls nach Weg 9.10 mit Schritt 10 fortgesetzt.

In Schritt 10 führt der GLMC eine LCS-Standard-Abfrage an die betreffende Mobil-Vermittlungsstelle bzw. Mobilfunkzelle zur Bestimmung der Position des Teilnehmers ME durch. Ähnlich wie oben für das Heimatregister (Schritte 6 und 7) wird nun anhand gegebenenfalls auftretender Fehler 11 entschieden, ob - im fehlerfreien Fall 11.12 - ein LCS-konformes Senden 12 der Positionsinformation loc stattfindet. Falls sich Fehler ergeben, die anzeigen, dass das Partnerelement den LCS-Standard nicht beherrscht, wird über Zweig 11.8 mit der entsprechenden Aktualisierung 8 der Entscheidungstabelle und den nachfolgenden Schritten gemäß dem oben Gesagten fortgesetzt.

Im bereits angesprochenen fehlerfrei LCS-konformen Fall wird in Schritt 12 an den Server PV die von diesem verlangte geographische Positionsinformation loc gesendet. Daneben kann auch vorgesehen sein, dass (in Fig. 2 nicht als eigener Schritt gezeigt) gegebenenfalls fehlende Einträge für das Heimatregister HLR bzw. die Mobil-Vermittlungsstelle M1 in der Entscheidungstabelle PE ergänzt werden. Damit ist der Vorgang der Behandlung der Positionierungsanfrage PINQ beendet.

Zusätzlich sollte ein Mechanismus vorgesehen sein, damit der GMLC P1 erkennen kann, wenn ein Kernnetzwerk-Element hinsichtlich des LCS erweitert wurde. Zu diesem Zweck kann beispielsweise vorgesehen sein, dass die Einträge der Entscheidungstabelle - oder überhaupt die Tabelle als Ganzes - in regelmäßigen Abständen gelöscht werden, z.B. nach Ablauf einer konfigurierbaren Zeit oder nach Durchführung einer konfigurierbaren Anzahl von Zugriffen auf das jeweilige Netzwerkelement. Ein so gelöschte Eintrag wird folglich bei dem nächsten Zugriff neu erstellt, in dem das oben beschriebene Verfahren neu durchgeführt wird.

Die Erfindung kann in heterogenen Kernnetzwerken, insbesondere in GSM/UMTS-Netzen mit Netzstellen verschiedener Hersteller, eingesetzt werden. Sie ermöglicht den Zugriff auf Positionsinformationen mobiler Teilnehmer unabhängig von den Fähigkeiten der diversen Kernnetzwerk-Elemente hinsichtlich der Lokalisierungsdienste. Durch das Sammeln von Informationen betreffend die Partner-Netzwerkelement in einer Entscheidungstabelle gelingt es, die an sich schwierige Entscheidung, auf welche Weise geographische Positionsinformationen mit einem Netzwerkelement auszutauschen ist, mit möglichst geringem administrativem Aufwand zu treffen.

## Patentansprüche

1. Verfahren zum Austausch geographischer Positionsinformationen zwischen einem Kernnetzwerk-Element (HLR,M1,M2,N2) eines öffentlichen Telekommunikationsnetzes, insbesondere Mobilfunknetzes, (MN1,MN2) und einer Positionsinformations-Servereinrichtung (P1) unter Verwendung zumindest einer Nachricht eines von Kernnetzwerken des Telekommunikationsnetzes unterstützten Protokolls, wobei seitens der Servereinrichtung (P1) eine Nachrichtenart der für den Austausch der Positionsinformationen verwendeten Nachricht ausgewählt wird,
**dadurch gekennzeichnet,**
**dass** durch die Servereinrichtung (P1) vor dem Zugriff auf ein Kernnetzwerkelement zum Austausch von Positionsinformationen ein Reihe von Zugriffsversuchen mit Nachrichten verschiedener Nachrichtenarten erfolgt, bis ein Zugriffsversuch zu einem erfolgreichen Informationsaustausch geführt hat.

2. Verfahren nach Anspruch 1,
**dadurch gekennzeichnet, dass** seitens der Servereinrichtung (P1) Entscheidungsinformation (PE) gehalten wird, in der zumindest einem Kernnetzwerk-Element (HLR,M1,M2,N2) jeweils zumindest eine Nachrichtenart zur Durchführung des Austauschs von Positionsinformationen zugeordnet ist, und
dass durch die Servereinrichtung (P1), wenn ein Zugriffsversuch zu einem erfolgreichen Informationsaustausch geführt hat, die Entscheidungsinformation um einen Eintrag (e) ergänzt wird - sofern dieser nicht schon vorhanden ist -, in dem jene Nachrichtenart, mit der der Zugriff erfolgreich war, dem Kernnetzwerk-Element zugeordnet ist.

3. Verfahren nach Anspruch 2,
**dadurch gekennzeichnet, dass** durch die Servereinrichtung (P1) vor dem Zugriff auf ein Kernnetzwerkelement (HLR,M1,M2,N2) zum Austausch von Positionsinformationen die Entscheidungsinformation (PE) auf einen Eintrag (e) für das betreffende Kernnetzwerk-Element geprüft wird und, falls ein solcher Eintrag vorliegt, der Positionsinformationen-Austausch aufgrund der eintragsgemäßen Nachrichtenart durchgeführt wird, anderenfalls ein Reihe von Zugriffsversuchen mit Nachrichten verschiedener Nachrichtenarten erfolgt, bis ein Zugriffsversuch zu einem erfolgreichen Informationsaustausch geführt hat, und seitens der Servereinrichtung die Entscheidungsinformation (PE) - soweit nicht bereits vorhanden - ergänzt wird.

4. Verfahren nach einem der Ansprüche 1 bis 3,
**dadurch gekennzeichnet, dass** ein Zugriffsversuch mit Nachrichten gemäß den geltenden LCS-Standards erfolgt, und falls dies nicht erfolgreich ist, sodann zumindest ein Zugriffsversuch gemäß vor den LCS-Standards geltenden Verfahren, insbesondere mittels MAP-ATI-Abfragen, erfolgt.

5. Verfahren nach Anspruch 4,
**dadurch gekennzeichnet, dass** an ein mobiles Endgerät (ME) des Netzes (MN1), dessen geographische Position zu bestimmen ist, eine Kurzmitteilung gesendet wird, wodurch ein Paging für dieses Endgerät ausgelöst wird.

6. Verfahren nach einem der Ansprüche 1 bis 5,
**dadurch gekennzeichnet, dass** im Falle dass kein Eintrag für ein bestimmtes Kernnetzwerk-Element gefunden wurde, eine 'Application Context Negotiation' mit dem Element durchgeführt wird und aufgrund dieser eine Nachrichtenart bestimmt wird.

7. Verfahren nach einem der Ansprüche 1 bis 6,
**dadurch gekennzeichnet, dass** die Entscheidungsinformation in Form einer Entscheidungstabelle (PE) gehalten wird, in der Einträge (e) nach den Kernnetzwerk-Elementen geordnet sind.

8. Positionsinformations-Servereinrichtung zur Durchführung des Verfahrens nach einem der Ansprüche 1 bis 7.
